# EUROPÄISCHE PATENTSCHRIFT

(11) **EP 1 884 684 B1**
(45) Veröffentlichungstag und Bekanntmachung des Hinweises auf die Patenterteilung: **12.06.2013**
(21) Anmeldenummer: 07013355.8
(22) Anmeldetag: 09.07.2007
(51) Int. Cl.: F16H 25/22

(54) **Getriebe zur Umwandlung einer Rotationsbewegung in eine Linearbewegung**
Transmission system for transforming a rotary movement into a linear movement
Engrenage destiné à la transformation d'un mouvement rotatif en mouvement linéaire

(30) Priorität: 03.08.2006 DE 102006036207
(43) Veröffentlichungstag der Anmeldung: 06.02.2008
(73) Patentinhaber: Schaeffler Technologies AG & Co. KG, 91074 Herzogenaurach (DE)
(72) Erfinder: Raber, Christoph, 66564 Ottweiler-Steinbach (DE); Greb, Peter, 77815 Bühl (DE)

(56) Entgegenhaltungen:
- EP-A1- 0 122 596
- WO-A1-2005/096472
- DE-A1- 1 927 767
- DE-A1- 2 406 750
- DE-A1- 3 048 010
- DE-C1- 19 680 488
- GB-A- 2 211 908
- US-A- 2 918 827
- US-A- 3 614 900

## Beschreibung

Die Erfindung betrifft einen Elektromotor mit einem in einen fünfer des Motorsintegrierten Getriebe, endsprechend dem Oberbegriff des Anspruchs 1 und wie es aus dem Dokument US 2,918,827 bekannt ist.

Getriebe zur Umwandlung einer Drehbewegung in eine Linearbewegung werden in der Fachsprache auch als Schraubgetriebe, Wälzschraubgetriebe oder auch Wälzringspindelgetriebe bezeichnet. Diese Getriebe werden häufig mit zwei oder mehr Wälzlagern und den dazu entsprechenden Wälzlageraufnahmen geführt.

Aus dem Stand der Technik ist beispielsweise gemäß EP 0122596 ein Wälzringspindeltrieb bekannt, der aus einer Arbeitsspindel, einem Wälzlager und einem Abtriebsgehäuse besteht. Als Übertragungsglied zwischen der Gewindespindel und dem Abtriebsgehäuse dient ein Wälzlager. Weiterhin weist dieser Wälzringspindeltrieb einen Wälzring auf, der in die Gewindenut der Gewindespindel eingreift. Das Besondere daran ist, dass das Wälzlager exzentrisch zur Längsachse der Gewindespindel angeordnet ist, wobei die Mittelachse des Wälzlagers gegenüber dieser geneigt ist. Im Innern des Abtriebsgehäuses ist weiterhin eine Wälzlageraufnahme angeordnet, die die Wälzlager aufnimmt, so dass eine zu übertragende axiale Kraft von der Gewindespindel über das Wälzlager in den Wälzlageraufnahmekörper übertragen wird und danach auf das Gehäuse. Dieser Wälzlageraufnahmekörper ist wiederum rotationssymmetrisch zur Längsachse der Gewindespindel angeordnet. Der Wälzring ist dabei mit einem halbkreisförmig gekrümmten Profil versehen, das mit dem entsprechend geformten Profil des Gewindes der Gewindespindel korrespondiert, um somit in der Nut des Gewindes der Gewindespindel einen Abwälzvorgang zu realisieren. Zur Verbesserung des Wirkungsgrades und der damit einhergehenden Verringerung der Reibungsverluste sind sowohl die Gewindenut des in die Gewindespindel eingreifenden Wälzringes als auch die Gewindenut der Gewindespindel mit einem Krümmungsradius versehen, wobei der Krümmungsradius des in die Gewindenut der Gewindespindel eingreifenden Wälzringes in Abhängigkeit vom Krümmungsradius der Gewindenut zu wählen ist. Die Herstellung dieser Krümmungsradien sind jedoch sehr kosten- und zeitintensiv.

Zur Lagerung der Gewindespindel und Aufnahme der Radialkräfte sind beidseitig am Ende des Wälzlageraufnahmekörpers Wälzlager vorgesehen. Die axial und radial wirkenden Kräfte am Wälzring werden von einem zwischen dessen Umfang und Abtriebsgehäuse eingebrachten Lager, in diesem Fall einem als Kugellager ausgebildeten Axiallager, aufgenommen. Die Lagerung des Wälzrings wird mittels mindestens einem Rillenkugellager realisiert, da diese geeignet sind, sowohl Axial- als auch Radialkräfte aufnehmen zu können.

Soll ein Getriebe dieser Bauart mit einem besonders geringen Spiel zwischen der Gewindespindel und der Mutter verwirklicht werden, so ist darauf zu achten, dass weitestgehend die Spielfreiheit für beide Drehrichtungen der Gewindespindel gewährleistet ist. Dies lässt sich besonders gut realisieren, wenn zwei oder mehr Wälzlager vorgesehen sind.

Allerdings treten bei diesem Getriebe Reibungsverluste an den Kraftübertragungs- und Lagerstellen durch die Lagerung auf, so dass der mechanische Wirkungsgrad bei der Umsetzung der Drehbewegung der Gewindespindel in eine Linearbewegung der Mutter zu wünschen übrig lässt.

Daher ist es Aufgabe der Erfindung, einem Elektromotor mit integriertem Getriebe der vorbenannten Art so auszuführen, dass dessen Wirkungsgrad verbessert wird und gleichzeitig seine Herstellung kostengünstig ist.

Diese Aufgabe wird mit einem Getriebe gelöst, das die Merkmale nach Anspruch 1 aufweist.

In einer weiteren vorteilhaften Ausgestaltung weist die Mutter mehrere als Rillen bezeichnete Gewindegänge auf, wobei der Abstand zweier aufeinander folgender Rillen der Gewindesteigung der Gewindespindel entspricht. Somit ist ein Kämmen oder Abrollen beider Flanken aufeinander möglich, wobei dabei eine möglichst große Fläche miteinander in Eingriff gelangt.

Ein Vorteil ist es weiterhin, wenn die Achsen von Gewindespindel und Mutter im Raum parallel zueinander verlaufen.

Besonders vorteilhaft ist es, wenn die Lagerung der Mutter durch mindestens ein Radial-Nadellager erfolgt. Durch die Wahl dieses Wälzlagers kann der erforderliche Bauraum wesentlich verringert werden.

In einer vorteilhaften Ausgestaltung des Getriebes wird die Gewindespindel durch beidseitig an der Stirnseite der Mutter angeordnete Wälzlager gelagert. Diese können ebenfalls aus Platzgründen als Axial-Nadellager ausgeführt sein.

Allerdings ist es besonders vorteilhaft unter Ausnutzung des durch Überlagerung der exzentrisch zueinander angeordneten kreisringförmigen Stirnflächen von Mutter und Gehäuse entstehenden und im Betrieb umlaufenden sichelförmigen Kontaktbereichs, diesen Bereich zur Gleitlagerung der Mutter bezüglich der Erzeugung einer Axialkraft zu nutzen. Aus diesem Grunde kann die verbleibende Lagerung aufgrund der fehlenden Axialkraft entsprechend kleiner dimensioniert werden und die Axial-Nadellager können entfallen. Dadurch kann das Getriebe kleiner dimensioniert werden und ist damit für kleinere Werkmaschinen einsetzbar. Außerdem können die Herstellungskosten gesenkt werden.

Weitere Vorteile und vorteilhafte Weiterbildungen der Erfindung sind Gegenstand der nachfolgenden Figuren sowie deren Beschreibungsteile.

Es zeigen:
- Figur 1: den prinzipiellen Aufbau eines Getriebes zur Umwandlung einer Drehbewegung in eine Linearbewegung in einer Schnittdarstellung,
- Figur 2: eine perspektivische Darstellung des Getriebes gemäß Figur 1,
- Figur 3: einen Ausschnitt aus der Figur 1 in einer Vergrößerung,
- Figuren 4a bis 4d: den gemäß der gewählten Schnittebenen sich ändernden Flächenkontakt zwischen Gewindespindel und Mutter
- Figur 5: eine mögliche Anwendung des Getriebes im Werkzeugmaschinenbereich,
- Figur 6: ein erfindungsgemäßes Getriebe gemäß Figur 5 mit einer alternativen bzw. optimierten Lagerung von Gewindespindel und Mutter,
- Figur 7: die sich im Kontaktbereich zwischen Mutter und Gehäuse ergebende sichelförmige Gleitlagerfläche gemäß Figur 6

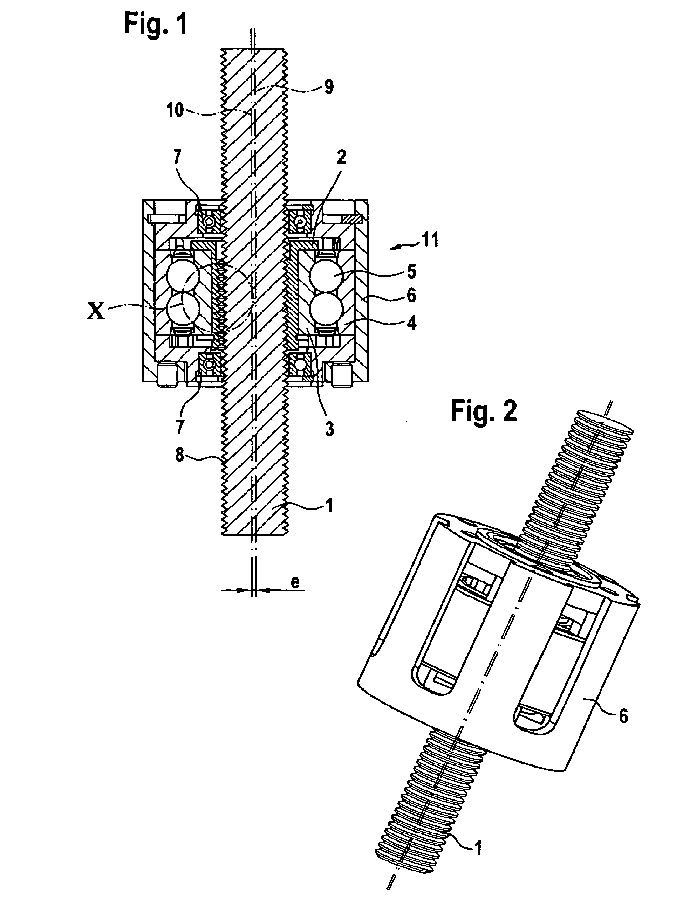

Bei der Beschreibung der Figuren 1 bis 7 wurden für gleiche Bauteile die gleichen Bezugszeichen verwendet.

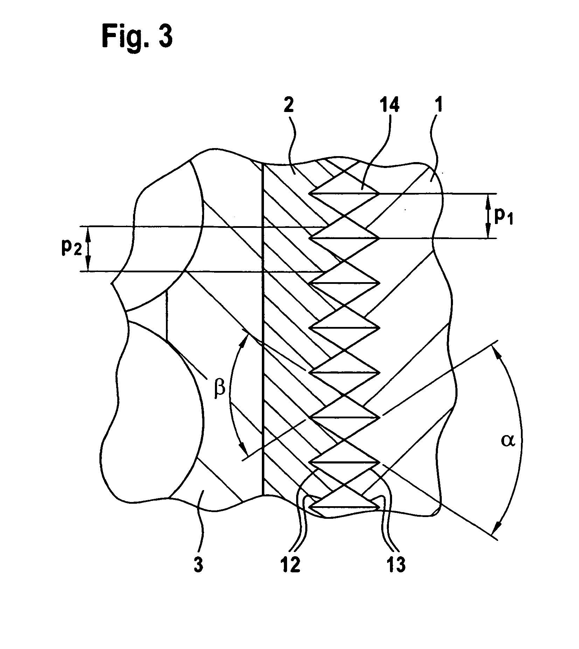

Die Figur 1 zeigt den prinzipiellen Aufbau eines Getriebes zur Umwandlung einer Drehbewegung in eine Linearbewegung in einer Schnittdarstellung. Dieses Getriebe weist eine Gewindespindel 1 mit einer entsprechenden Gewindesteigung p1, beispielsweise von 1,5 mm auf, die von einer Mutter 2 umhüllt wird. Die Mutter 2 ist dabei mit einem entsprechend größeren Innendurchmesser als dem Außendurchmesser der Gewindespindel 1 versehen und weist in diesem Ausführungsbeispiel mehrere Gewindegänge 14 (Fig. 3) auf, wobei jeder Gewindegang 14 einen Gewindekeil besitzt. Allerdings kann für die Erfüllung der Funktion in die Mutter 2 auch nur ein Gewindegang 14 eingebracht sein. Wichtig dabei ist, dass diese Gewindegänge 14 keine Steigung haben, wodurch diese auch als Rillen bezeichnet werden können. Weiterhin ist die Mutter 2 exzentrisch zur Achse 9 der Gewindespindel 1 angeordnet. Ihre Achse verläuft parallel zur Achse 9 der Gewindespindel 1 und befindet sich zu dieser in einem Abstand, was dazu führt, dass, wie aus der Schnittdarstellung der Figur 1 hervorgeht, das Profil der Mutter 2, also die Gewindekeile, auf der rechten Seite der Gewindespindel 1 in deren Gewindeprofil, hier dem Gewindegrund, kontaktiert und auf der linken Seite kein Kontakt besteht. Dieser Eingriff von Gewindekeil der Mutter 2 in den Gewindegrund der Gewindespindel 1 ist nur möglich bei gleich großen Flankenwinkeln der Profile von Gewindespindel 1 und Mutter 2. Infolge der Drehung der Gewindespindel 1 um ihre Achse 9 muss sich die Mutter 2 um ihre Achse 10 drehen, da sie die Gewindespindel 1 an einer Umfangsstelle berührt und sich an deren Umfang abwälzt.

Dieser Kontakt längs des Gewindes der Gewindespindel 1 bewirkt, dass sich die Mutter 2 zusätzlich zur Drehung der Gewindespindel 1 zwangsläufig auch in Achsrichtung bewegt. Auf die äußere Oberfläche der Mutter 2 ist ein Abstützlager 11 mit seinem Innenring 3 aufgeschoben. Zwischen dem Innenring 3 und dem Außenring 4 befinden sich die Wälzkörper 5. Der Außenring 4 des Abstützlagers 11 ist schließlich mit einem Lagergehäuse 6 verbunden, das sich mittels zweier Radiallager 7 auf der Gewindespindel 1 abstützt.

Wird die Gewindespindel 1 in eine Drehbewegung versetzt, dreht die Mutter 2 infolge des Reibschlusses durch den Kontakt - Flanke Gewindekeil Gewindespindel 1 mit Flanke Gewindekeil Mutter 2 - mit. Die Steigung p1 der Gewindespindel 1 bewirkt somit eine Axialbewegung der Mutter 2, in diesem Falle bei einer Umdrehung der Gewindespindel 1 von 1,5mm. Dabei stützt sich die eingeleitete Axialkraft über den Keil des Gewindes an der Kontaktstelle von Mutter 2 und Gewindespindel 1 ab, wodurch die eingeleitete Axialkraft eine radiale Komponente erhält, die von der Lagerung der Gewindespindel 1 aufgenommen werden muss.

Allerdings kann ebenso gut anstelle der Gewindespindel 1 auch der Außenring 4 des Abstützlagers 11 in eine Drehbewegung um die Achse 10 versetzt werden. Hierbei wandert der tiefste Eingriffspunkt der beiden Keile, die durch die Winkel gebildet werden, um die Gewindespindel 1. Die resultierende radiale Abstützkraft wandert dadurch ebenfalls um. Zur Abstützung dieser Kraft muss die Achse 9 der Gewindespindel 1 geführt werden. Dazu wird diese in den Radiallagern 7 geführt.

Die Figur 2 zeigt den Aufbau eines Getriebes in einer perspektivischen Darstellung gemäß Figur 1. Hierbei ist das Lagergehäuse erkennbar, das auf der Gewindespindel 1 angeordnet ist.

Die Figur 3 zeigt einen Ausschnitt links der Achse 9 aus der Figur 1, wo sich die beiden Gewindeflanken 12, 13 von Gewindespindel 1 und Mutter 2 nicht berühren. In dieser Figur 3 sind zum besseren Verständnis die Profile der beiden kontaktierenden Bauteile vergrößert dargestellt, so dass die Flankenwinkel α und β der Gewindeflanken 12 und 13 von Gewindespindel 1 und Mutter 2 sowie der Rillenabstand p2 der Mutter 2 und die Steigung p1 der Gewindespindel 1 deutlich erkennbar sind.

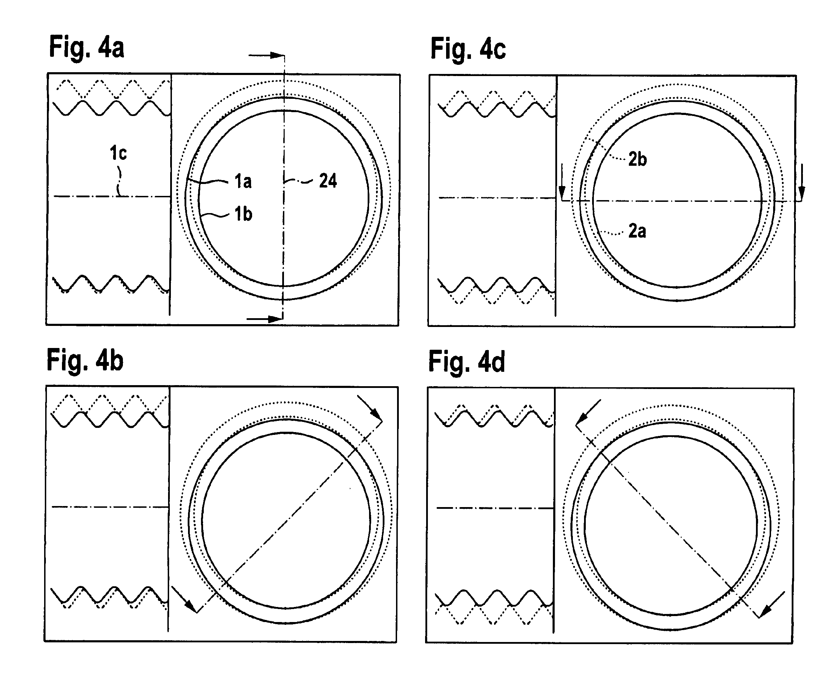

Wird, wie in der Figur 4a dargestellt, senkrecht zu den sich kontaktierenden Bauteilen, durch diese eine durch den Mittelpunkt der Gewindespindel 1 verlaufende Schnittebene 24 gelegt, die in den nachfolgenden Figuren 4b bis 4d im Uhrzeigersinn weiterbewegt wird, so ist deutlich der Flächenkontakt zwischen der Gewindespindel 1 (gezogene Linie) und der Mutter 2 (gestrichelte dargestellt) erkennbar. In diesen Figuren ist dabei jeweils mit 1a der Außendurchmesser und mit 1 b der Kemdurchmesser der Gewindespindel 1 sowie mit 2a der Außendurchmesser und mit 2b der Kemdurchmesser der Mutter 2 bezeichnet.

In der rechten Hälfte der jeweiligen Figur ist dabei die Draufsicht auf die Schnittebene 24 erkennbar und in der linken Hälfte sind jeweils beidseitig zur Achse 1 c der Gewindespindel 1 die Kontaktpunkte bzw. Kontaktflächen beider Bauteile sichtbar. Die Schnittebene 24 befindet sich in der Figur 4a bei einem Winkel von 0°. In der Figur 4b liegt die Schnittebene 24 in einem Winkel von 45°; in der Figur 4c in einem Winkel von 90° und schließlich in der Figur 4d in einem Winkel von 135°. In der Figur 4c ist erkennbar, dass einerseits die Radien von Gewindespindel 1 und Mutter 2 bezogen auf die Achse 1c gleich sind, andererseits ist erkennbar, dass sich unterhalb der Achse 1c die Flächen der rechten Flanken der Gewindespindel 1 mit der der Mutter 2 berühren. Auf der oberen Hälfte dagegen kehrt sich dieser Kontakt um, so dass sich die linken Flanken der Gewindespindel 1 mit den rechten Flanken der Mutter 2 kontaktieren. In der Figur 4b ist erkennbar, dass sich der Kontakt an den Flanken von Gewindespindel 1 und Mutter 2 unterhalb und oberhalb der Achse 1 c wieder verändert hat, so dass in dieser Figur nur noch eine axiale Kraft auf Grund des Flächenkontaktes von Gewindespindel 1 und Mutter 2 unterhalb der Achse 1c übertragen werden kann. In Figur 4d hat sich dieser Flächenkontakt bezüglich der Achse 1 c umgekehrt, so dass eine Kraftübertragung nur durch den Flächenkontakt von Gewindespindel 1 und Mutter 2 oberhalb der Achse 1c möglich ist.

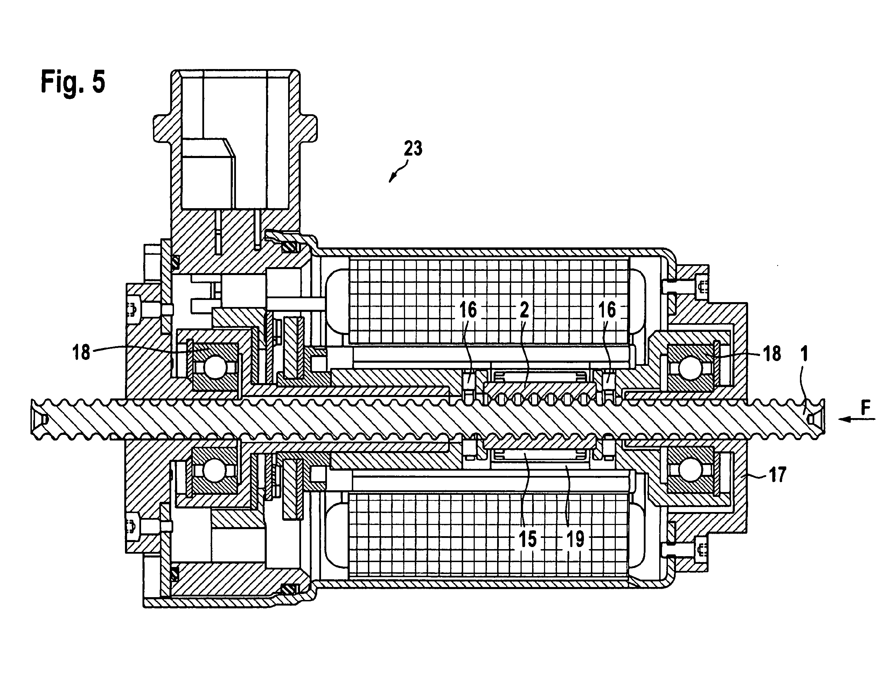

Da zur Erzeugung der Drehbewegung oft ein Elektromotor zur Anwendung kommt, ist gemäß Figur 5 die Integration des Getriebes in den Läufer des Motors oft vorteilhaft. Der koaxial zur Gewindespindel 1 angeordnete Läufer 19 des Elektromotors 23 besitzt an seinem Innendurchmesser eine Exzenterbohrung, in der die Mutter 2 gelagert ist. Die extern rotatorisch fixierte Gewindespindel 1 wird demnach umgeben von der exzentrisch zu dieser gelagerten Mutter 2. Im Gegensatz zu der in Figur 1 beschriebenen Lagerung der Mutter 2 wird diese in dieser Ausführung von einem Radial-Nadellager 15 übernommen, was aufgrund der verringerten Abmessungen in radialer Richtung ebenfalls zu einer Verringerung des benötigten Bauraumes führt und eine kompakte Integration in den Elektromotor 23 erlaubt. Dieses Radial-Nadellager 15 dient dazu, die auftretenden Radialkräfte aufzunehmen und die Drehbewegung des Motorläufers 19 von der Mutterdrehbewegung zu entkoppeln. Zur Aufnahme der Axialkräfte der Gewindespindel 1 sind beidseitig an der Stirnseite der Mutter 2 Axial-Nadellager 16 als Wälzlager vorgesehen. Diese Axialkräfte werden in den Motorläufer 19 des Elektromotors 23 eingeleitet und von diesem weiter über ein Läuferlager 18 an das Gehäuse 17 des Elektromotors 23 weitergeleitet. Sowohl das Axial-Nadellager 16 als auch das Rotor-Lager 18, das ebenfalls ein Wälzlager ist, müssen dabei die volle Axialkraft übertragen, deren Richtung durch den Pfeil gekennzeichnet ist.

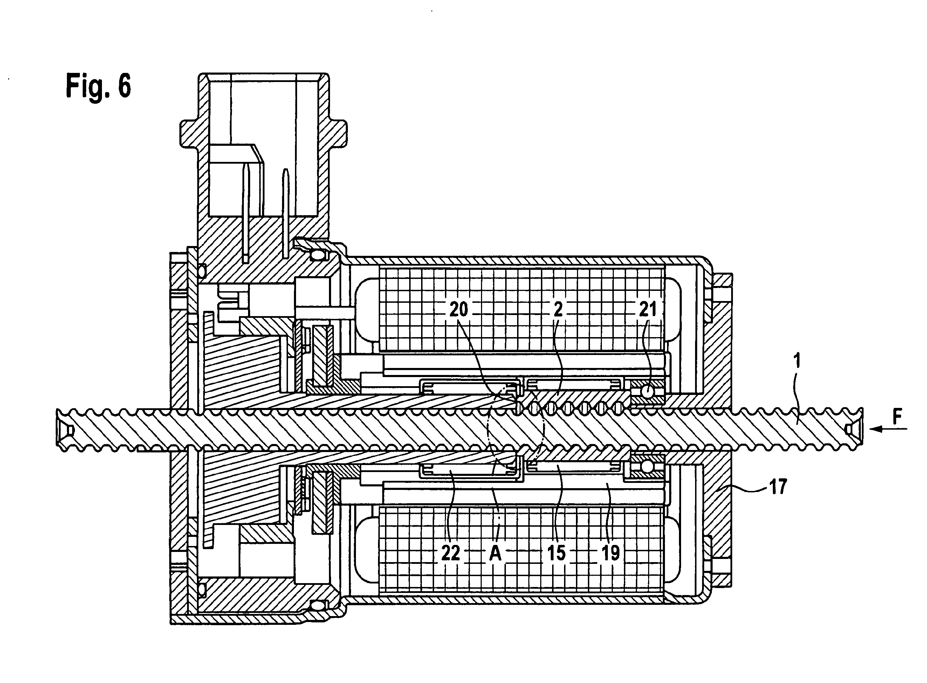

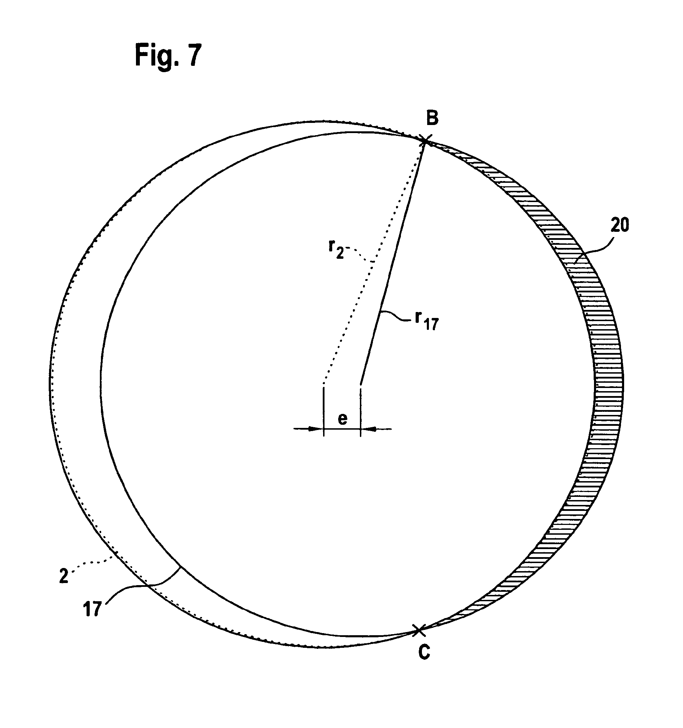

In der Figur 6 ist das in den Elektromotor 23 eingesetzte erfindungsgemäße Getriebe gemäß Figur 4 dargestellt. Hierbei sind die Mutter 2, das Radial-Nadellager 15, die Gewindespindel 1, der Motorläufer 19 und das Gehäuse 17 des Elektromotors 23 prinzipiell an der gleichen Stelle angeordnet. Allerdings weist diese Variante im Gegensatz zu Figur 5 eine veränderte axiale Lagerung der Mutter 2 auf. Somit wird die durch die Gewindespindel 1 in die Mutter 2 eingeleitete Axialkomponente nicht über ein Wälzlager 16 in den Läufer 19 und von diesem über ein Läuferlager 18 in das Gehäuse 17 eingeleitet, sondern lediglich über ein Gleitlager direkt in das Gehäuse 17. Dieses entsteht durch den sichelförmigen Kontaktbereich 20 zwischen Mutter 2 und Gehäuse 17. Zur Verdeutlichung wird dieser Ausschnitt A später in der Figur 7 näher erläutert. Aus diesem Grunde können die Läuferlager 21 und 22 aufgrund der fehlenden Axialkraft entsprechend kleiner dimensioniert werden und die beiden Axial-Nadellager 16 können entfallen. Diese Variante der Lagerung hat zur Folge, dass das Getriebe kleiner dimensioniert werden kann und damit für kleinere Bauräume einsetzbar ist und außerdem können die Herstellungskosten gesenkt werden.

Die Figur 7 zeigt die sich im Kontaktbereich 20 einstellende Gleitlagerfläche gemäß Figur 6. Diese ist schraffiert dargestellt. In Abhängigkeit von den jeweils gewählten Durchmessern bzw. den Verhältnissen von Innendurchmesser der Mutter 2 und dem Außendurchmesser des Gehäuses 17 ergibt sich ein sichelförmiger Flächenkontakt. Die Stelle B bezeichnet den Beginn und die Stelle C das Ende der sichelförmigen Fläche. Anders ausgedrückt bedeuten diese beiden Stellen B und C, dass an der Stelle B der Kontakt zwischen Mutter 2 und Gehäuse 17 eintritt, über die schraffierte Fläche fortsetzt, wobei jedes Bauteil einen eigenen Drehpunkt aufweist und diese einen Abstand e zueinander besitzen, flächenmäßig bis zum Erreichen eines Maximums stetig zunimmt, um sich wieder zu verringern, bis er an der Stelle C endet. Dabei bildet der Radius r17 des Gehäuses 17 die äußere Begrenzung und der Radius r2 der Mutter die innere Begrenzung der schraffierten Fläche. Aus dieser Figur geht ebenfalls der Zusammenhang zwischen Wirkungsgrad und Tragfähigkeit hervor. Eine kleinere Fläche zeigt einen besseren Wirkungsgrad infolge geringerer Bohrreibung an, wobei jedoch eine höhere Flächenpressung auftritt. Vergrößert sich die Fläche, verringert sich die Flächenpressung. Dadurch wird wiederum die Tragfähigkeit erhöht und ebenfalls die Lebensdauer.

Dabei werden die beiden in Kontakt miteinander stehenden Flächen nicht gegeneinander verdreht, was eine hohe Reibung verursachen würde. Die beiden Flächen rollen nur um einen gemeinsamen Drehpunkt nahe dem Flächenschwerpunkt umeinander ab. Aus diesem Grunde ergibt sich trotz der Gleitreibung, die sich hauptsächlich aus Bohrreibungsanteilen zusammensetzt, ein sehr guter Wirkungsgrad.

### Bezugszeichenliste

- 1: Gewindespindel
- 1a: Außendurchmesser Gewindespindel
- 1b: Kerndurchmesser Gewindespindel
- 1c: Achse der Gewindespindel
- 2: Mutter
- 2a: Außendurchmesser Mutter
- 2b: Kerndurchmesser Mutter
- 3: Wälzlager-Innenring
- 4: Wälzlager-Außenring
- 5: Wälzlager-Körper
- 6: Lagergehäuse
- 7: Radiallager
- 8: Gewindenut
- 9: Achse (Gewindespindel)
- 10: Achse (Mutter)
- 11: Abstützlager
- 12: Gewindeflanke Mutter
- 13: Gewindeflanke Spindel
- 14: Gewindegang / Rille
- 15: Radial - Nadellager
- 16: Axial - Nadellager
- 17: Gehäuse
- 18: Läuferlager
- 19: Exzenterrotor
- 20: Kontaktbereich
- 21: Läuferlager
- 22: Läuferlager
- 23: Elektromotor
- 24: Schnittebene
- e: Exzentrizität
- α: Flankenwinkel des Gewindes der Gewindespindel
- β: Flankenwinkel des Gewindes der Mutter
- A: Ausschnitt
- B: Schnittstelle
- C: .....Schnittstelle
- r₂: .....Radius Mutter
- r₁₇: Radius Gehäuse
- p₁: Gewindesteigung
- p₂: Rillenabstand

## Patentansprüche

1. Elektromotor (23) mit einem in den Läufer (19) des Motores integrierten Getriebe zur Umwandlung einer Rotationsbewegung in eine Linearbewegung mit einer Gewindespindel (1), einer achsparallel zur Gewindespindel (1) gelagerten Mutter (2), mindestens einem Abstützlager (11) und einem Lagergehäuse (6), wobei die Achsen von Mutter (2) und Gewindespindel (1) eine Exzentrizität (e) zueinander aufweisen, **dadurch gekennzeichnet, dass** die Mutter (2) mit mindestens einem Gewindegang versehenen ist, deren Gewindegang keine Steigung aufweist und der zumindest teilweise in die Gewindenut (8) der Gewindespindel (1) eingreift, wobei der Flankenwinkel (α) des Gewindes der Mutter (2) im Wesentlichen dem Flankenwinkel (β) des Gewindes der Gewindespindel (1) entspricht und die Gewindeflanken (12, 13) zumindest auf der eine Axialkraft übertragenden Seite im Wesentlichen gerade verlaufen, und wobei der koaxial zur Gewindespindel (1) angeordnete Läufer (19) des Elektromotors (23) an seinem Innendurchmesser eine Exzenterbohrung besitzt, in der die Mutter (2) gelagert ist, so dass die extern rotatorisch fixierte Gewindespindel (1) demnach von der exzentrisch zu dieser gelagerten Mutter (2) umgeben ist.

2. Elektromotor mit einem in den Läufer des Motores integrierten Getriebe nach Anspruch 1, **dadurch gekennzeichnet, dass** die Mutter (2) mehrere als Rillen bezeichnete Gewindegänge (14) aufweist.

3. Elektromotor mit einem in den Läufer des Motores integrierten Getriebe nach Anspruch 2, **dadurch gekennzeichnet, dass** der Abstand (p2) zweier aufeinander folgender Rillen (14) der Mutter (2) der Gewindesteigung (p1) der Gewindespindel (1) entspricht.

4. Elektromotor mit einem in den Läufer des Motores integrierten Getriebe nach Anspruch 1, **dadurch gekennzeichnet, dass** die Achsen (9, 10) im Raum parallel zueinander verlaufen.

5. Elektromotor mit einem in den Läufer des Motores integrierten Getriebe nach Anspruch 1, **dadurch gekennzeichnet, dass** die Lagerung der Mutter (2) durch mindestens ein Radial-Nadellager (15) erfolgt.

6. Elektromotor mit einem in den Läufer des Motores integrierten Getriebe nach Anspruch 1, **dadurch gekennzeichnet, dass** die Lagerung der Mutter (2) durch beidseitig an der Stirnseite der Mutter (2) vorgesehene, als Axial-Nadellager (16) ausgeführte Wälzlager erfolgt.

7. Elektromotor mit einem in den Läufer des Motores integrierten Getriebe nach den Ansprüchen 1 und 5 **dadurch gekennzeichnet, dass** die axiale Lagerung der Mutter (2) durch eine Gleitlagerung erfolgt.

8. Elektromotor mit einem in den Läufer des Motores integrierten Getriebe nach Anspruch 7, **dadurch gekennzeichnet, dass** diese Gleitlagerung entsteht durch einen sichelförmigen Kontaktbereich (20) zwischen Mutter (2) und Gehäuse (17).

## Claims

1. Electric motor (23) having a gear mechanism, which is integrated into the rotor (19) of the motor, for converting a rotational movement into a linear movement having a threaded spindle (1), a nut (2) which is mounted axially parallel to the threaded spindle (1), at least one supporting bearing (11) and a bearing housing (6), the axes of nut (2) and threaded spindle (1) having an eccentricity (e) with respect to one another, **characterized in that** the nut (2) is provided with at least one thread turn, the thread turn of which has no lead and which thread turn engages at least partially into the threaded groove (8) of the threaded spindle (1), the flank angle (α) of the thread of the nut (2) corresponding substantially to the flank angle (β) of the thread of the threaded spindle (1), and the thread flanks (12, 13) running substantially in a straight line at least on the side which transmits an axial force, and the rotor (19), arranged coaxially with respect to the threaded spindle (1), of the electric motor (23) having an eccentric bore on its inner diameter, in which eccentric bore the nut (2) is mounted, with the result that the externally rotationally fixed threaded spindle (1) is surrounded accordingly by the nut (2) which is mounted eccentrically with respect to the said threaded spindle (1).

2. Electric motor having a gear mechanism which is integrated into the rotor of the motor according to Claim 1, **characterized in that** the nut (2) has a plurality of thread turns (14) which are called grooves.

3. Electric motor having a gear mechanism which is integrated into the rotor of the motor according to Claim 2, **characterized in that** the spacing (p₂) of two grooves (14) of the nut (2) which follow one another corresponds to the thread lead (p₁) of the threaded spindle (1).

4. Electric motor having a gear mechanism which is integrated into the rotor of the motor according to Claim 1, **characterized in that** the axes (9, 10) run spatially parallel to one another.

5. Electric motor having a gear mechanism which is integrated into the rotor of the motor according to Claim 1, **characterized in that** the nut (2) is mounted by at least one radial needle bearing (15).

6. Electric motor having a gear mechanism which is integrated into the rotor of the motor according to Claim 1, **characterized in that** the nut (2) is mounted by anti-friction bearings which are configured as axial needle bearings (16) and are provided on both sides of the end side of the nut (2).

7. Electric motor having a gear mechanism which is integrated into the rotor of the motor according to Claims 1 and 5, **characterized in that** the nut (2) is mounted axially by a plain bearing.

8. Electric motor having a gear mechanism which is integrated into the rotor of the motor according to Claim 7, **characterized in that** the said plain bearing is produced by a crescent-shaped contact region (20) between the nut (2) and the housing (17).

## Revendications

1. Moteur électrique (23) comprenant un engrenage intégré dans le rotor (19) du moteur pour convertir un mouvement de rotation en un mouvement linéaire, comprenant une broche filetée (1), un écrou (2) monté avec son axe parallèle à la broche filetée (1), au moins un palier de support (11) et un logement de palier (6), les axes de l'écrou (2) et de la broche filetée (1) présentant une excentricité l'un par rapport à l'autre, **caractérisé en ce que** l'écrou (2) est pourvu d'au moins un filet dont le filet ne présente aucun pas de filetage et qui vient en prise au moins en partie dans la rainure filetée (8) de la broche filetée (1), l'angle de flanc (α) du filetage de l'écrou (2) correspondant essentiellement à l'angle de flanc (β) du filetage de la broche filetée (1) et les flancs de filetage (12, 13) s'étendant essentiellement en ligne droite au moins sur le côté transmettant une force axiale, et le rotor (19) du moteur électrique (23) disposé coaxialement à la broche filetée (1) possédant sur son diamètre intérieur un alésage excentrique dans lequel est supporté l'écrou (2), de telle sorte que la broche filetée (1) fixée en rotation extérieurement soit de ce fait entourée par l'écrou (2) supporté de manière excentrique par rapport à celle-ci.

2. Moteur électrique comprenant un engrenage intégré dans le rotor du moteur selon la revendication 1, **caractérisé en ce que** l'écrou (2) présente plusieurs filets (14) désignés par gorges.

3. Moteur électrique comprenant un engrenage intégré dans le rotor du moteur selon la revendication 2, **caractérisé en ce que** la distance (P2) entre deux gorges successives (14) de l'écrou (2) correspond au pas de filetage (P1) de la broche filetée (1).

4. Moteur électrique comprenant un engrenage intégré dans le rotor du moteur selon la revendication 1, **caractérisé en ce que** les axes (9, 10) s'étendent parallèlement l'un à l'autre dans l'espace.

5. Moteur électrique comprenant un engrenage intégré dans le rotor du moteur selon la revendication 1, **caractérisé en ce que** le support sur palier de l'écrou (2) a lieu par le biais d'au moins un palier à aiguilles radial (15).

6. Moteur électrique comprenant un engrenage intégré dans le rotor du moteur selon la revendication 1, **caractérisé en ce que** le support sur palier de l'écrou (2) a lieu par le biais d'un palier à roulement prévu des deux côtés du côté frontal de l'écrou (2), réalisé sous forme de palier à aiguilles axial (16).

7. Moteur électrique comprenant un engrenage intégré dans le rotor du moteur selon les revendications 1 et 5, **caractérisé en ce que** le support sur palier axial de l'écrou (2) a lieu par le biais d'un support sur palier lisse.

8. Moteur électrique comprenant un engrenage intégré dans le rotor du moteur selon la revendication 7, **caractérisé en ce que** ce support sur palier lisse est réalisé par une région de contact (20) en forme de croissant entre l'écrou (2) et le boîtier (17).
